Europäisches Patentamt

European Patent Office

Office européen des brevets

(11) Publication number: **0 173 490**
**B1**

# (12) EUROPEAN PATENT SPECIFICATION

(45) Date of publication of patent specification: **24.10.90**

(21) Application number: **85305586.1**

(22) Date of filing: **06.08.85**

(51) Int. Cl.⁵: **C 08 L 95/00** // (C08L3/04, 9:10)

(54) Asphalt or bitumen emulsion.

(30) Priority: **08.08.84 US 638790**

(43) Date of publication of application:
**05.03.86 Bulletin 86/10**

(45) Publication of the grant of the patent:
**24.10.90 Bulletin 90/43**

(84) Designated Contracting States:
**BE CH DE FR GB IT LI NL SE**

(56) References cited:
**BE-A- 403 494**
**FR-A- 836 354**
**FR-A-2 372 205**
**GB-A- 489 847**

**CHEMICAL ABSTRACTS, vol. 77, 1972, page 101, no. 103584n, Columbus, Ohio, US; & JP - A - 71 42 041 (FUKUOKA PAPER MTG. CO. LTD.) 13-12-1971**

(73) Proprietor: **BASF Aktiengesellschaft Carl-Bosch-Strasse 38 D-6700 Ludwigshafen (DE)**

(72) Inventor: **Moore, Richard Brown 8724 Hurricane Manor Chattanooga Tennessee, 37421 (US)**

Courier Press, Leamington Spa, England.

**Description**

The present invention relates to the modification of asphalt, specifically the modification of emulsions of asphalt to meet ASTM specifications for Saybolt viscosity of various grades of asphalt emulsions. As used in this specification, the term asphalt covers e.g. naturally occuring asphalts (e.g. Trinidad Lake asphalt), and synthetic asphalts produced from e.g. refining oil.

The term "asphalt" used in this application also covers the alternative term "bitumen". Thus, an asphalt emulsion can be termed a bitumen emulsion.

Asphalt has been used as a construction material by man since at least as early as biblical times. Slimes from pits of Gomorrah, used in mortar in the construction of the tower of Babel, were asphalt. In more recent times, asphalt has been used as a cement in the construction of pavement. Asphalt emulsions are widely used in the manufacture and maintenance of pavements. One problem encountered is that the hot or warm asphalt emulsion is too fluid and may separate from the aggregate. This is particularly true if the asphalt emulsion has been modified with a latex of a synthetic polymer. The modification of asphalt with synthetic polymers has been well known since at least the 1930's. There are a number of texts discussing the application and modification of asphalt including Asphalts and Allied Substances, Fifth Ed., by Herbert Abraham, Van Nostrand; Asphalt Science and Technology, Edwin J. Barth, Gordon and Breach, Asphalts and Road Materials, Modern Technology, John E. Parson, Noyes Data Corp., 1977; and A Basic Asphalt Emulsion Manual, The Asphalt Institute Manual Series No. 19 (MS-19), March 1979.

There are also a few texts which discuss the use of various natural thickeners in asphalt emulsions.

British Patent 437,674, published November 4, 1935, in the name of E. I. Du Pont de Nemours and Company discloses a dispersing agent for aqueous emulsions of asphalt. The dispersing agent is an alkali (including ammonium) or alkaline earth salt of an alkyl sulphuric acid, the alkyl radical containing at least 8 carbon atoms. The disclosure also states "The emulsions may also contain thickening agents such as casein, albumen, glue, gelatin, resin, or starches, tannin, gums, dextrin and tapioca fluor . . .". Belgian Patent 403,494 to Eugène Rouault discloses stable aqueous asphalt emulsions containing conventional dispersing agents and, as protective colloids and viscosity increasing agents, natural or solubilised starches. The asphalt emulsions disclosed in the said Belgian patent do not contain dispersions of synthetic polymers. Such polymers are very useful in certain respects, but they have the serious disadvantage of dramatically lowering the viscosity of such emulsions. It has been found that starches and starch derivatives of the kind mentioned in the said Belgian patent are not able to impart to such polymer-dispersion-containing asphalt emulsions for prolonged storage periods a viscosity of the minimum level prescribed by the relevant standard, i.e. 75 Saybolt seconds at a temperature of 122°F (50°C).

As used in this specification, the term Saybolt viscosity means the Saybolt Furol Viscosity in accordance with the American Society for Testing and Materials D88 at 122°F (50°C). Rapid setting cationic asphalt emulsions (CRS-2) should have a viscosity from 100 to 400 Saybolt seconds (ASTM-D2397-79). For highway construction rapid setting anionic asphalt emulsions (RS-2) should have a viscosity of 75 to 400 Saybolt seconds (ASTM-D977). The asphalt emulsions should meet the RS-2 and CRS-2 asphalt emulsion specifications.

C.A. 77, 103 584n (1972) discloses an asphalt emulsion intended for the manufacture of asphalt-containing paper which emulsion is free of polymer dispersions but may contain crosslinkable starch as a protective colloid. For said purpose the asphalt emulsion has to have a low viscosity because it could otherwise not readily be added to the pulp. A low viscosity is attained by a low asphalt content, namely only 20% asphalt, based on the water, or 16.7%, based on the emulsion. The problem to be solved by the present invention does not occur with asphalt emulsions of this kind.

Cationic rapid set emulsions typically have a pH of about 3. Conventional anionic emulsions have a pH of about 12. Generally, unmodified starches degrade in a relatively short time at pH's of less than about 5 or greater than about 10.

At the present time, there are no convenient post-additives which may be subsequently added to an existing asphalt emulsion to build and maintain its viscosity. Generally, if the viscosity of an asphalt emulsion is too low, it is necessary to blend the emulsion with an emulsion having a higher viscosity to try to raise the viscosity of the asphalt emulsion.

The present invention provides a modified aqueous asphalt emulsion having a pH of up to 10 consisting essentially of:

(a) an aqueous asphalt emulsion;

(b) up to 15 per cent by dry weight, based on the dry weight of the aqueous asphalt emulsion of latex of a polymer selected from:

(i) a homopolymer of a $C_4$—$C_6$ conjugated diolefin;

(ii) a copolymer of:

(1) from 40 to 20 weight per cent of a $C_{8-12}$ vinyl or vinylidene aromatic monomer which may be unsubstituted or substituted by a straight or branched chain $C_{1-4}$ alkyl radical or a chlorine or bromine atom;

(2) from 60 to 80 weight per cent of a $C_{4-6}$ conjugated diolefin;

(3) from 0 to 10 weight per cent of a $C_{3-9}$ ethylenically unsaturated carboxylic acid or a $C_{1-4}$ alkyl or alkanol ester thereof or an amide derivative thereof which may be unsubstituted or substituted at the N atom by up to 2 $C_{1-4}$ alkyl or alkanol radicals; and

(iii) a copolymer of

(1) up to 40 weight percent of a $C_{3-6}$ alkenyl nitrile; and

(2) the balance substantially a $C_{4-6}$ conjugated diolefin; and

(c) up to 1 per cent by dry weight based on the dry weight of said aqueous asphalt emulsion of a cross-linked starch comprising (e.g. consisting) not more than 27 per cent of amylose and the balance substantially amylopectin.

One example of the present invention provides a modified aqueous asphalt emulsion having 50 to 75 per cent by weight solids and a pH of less than 10, comprising on a dry basis:

(a) from 84 to 99.9 parts by weight of an asphalt;

(b) up to 15 parts by weight of a polymer selected from the group (i), (ii) and (iii) above; and

(c) up to 1 per cent by dry weight, based on the dry weight of said asphalt, of a cross-linked starch comprising (e.g. consisting) not more than 20 weight per cent of amylose and the balance substantially amylopectin.

The emulsions of the present invention may be held at temperatures from about 120°F (49.9°C) to about 180°F (82.2°C) for times from about 24 hours not only without a significant drop but even with a surprising increase in viscosity.

The starches for the present invention are waxy starches. Waxy starch is discussed in Starch Chemistry and Technology, Vol. I and II, edited by R. L. Whistler and E. F. Paschall, Academic Press, New York, 1965. Waxy starches contain not more than 27 per cent amylose and the balance amylopectin. Preferably, the waxy starch contains less than 5 per cent amylose and most preferably less than 1 per cent amylose. Starches used in the present invention are cross-linked. The preparation of cross-linked starch is achieved by reacting starch with a molecule capable of reacting with two or more hydroxyl groups. Some crosslinking agents are: formaldehyde, phosphorus oxydichloride, epichlorohydrin, trimetaphosphate, aldehydes, dialdehydes, vinyl sulfone, diepoxides, 1,3,5-trichloro- and 1,3,5-triacryl-S-triazine, hexamethylene diisocyanate, bis(hydroxymethyl) ethyleneurea, and N,N' methylenebisacrylamide. Said examples of modified or cross-linked starches are commercially available. All unmodified starches break down to glucose below pH of 5 or above 7. Modification of starches may make the starch more resistant to degradation to glucose at pH's up to about 10. One particularly useful product is sold by the A. E. Staley Manufacturing Company under the Tradename "Resista".

An asphalt emulsion in the present invention may have a pH up to about 10. Preferably, the pH is from about 1.5 to about 10, most preferably from about 4 to about 8.

An asphalt emulsion in the present invention may be modified with up to 1 percent by weight, based on the dry weight of asphalt, of a cross-linked waxy starch. Preferably, the cross-linked waxy starch is present in an amount from about 0.05 to 0.5 per cent by weight, based on the dry weight of the asphalt. Most preferably the starch is present in an amount from about 0.1 to about 0.4, preferably about 0.25 per cent by weight based on the dry weight of asphalt.

The starch may be added to the asphalt emulsion as a slurry containing up to about 50 percent of starch and the balance a compatible emulsifier system for the asphalt emulsion. Compatible means compatible in terms of emulsifier change and pH. The most convenient slurry is about a 20 per cent starch, 80 per cent aqueous emulsifier system for the asphalt emulsion. However, in many instances water may be used to form the starch slurry. In some instances, the starch may be added to the asphalt emulsion in dry form provided steps are taken to minimize coagulation such as by controlling the rate of addition. This procedure is not advised for rapid set emulsions. Before mixing on a commercial scale, lab quantities of the asphalt emulsion and starch slurry should be mixed to see if there are any problems with the formation of coagulum.

The asphalt emulsion further comprises a latex of a polymer. The latex generally should contain from about 35 to about 75 per cent by weight of polymeric particles and have a pH of less than about 10. The polymer in the latex is preferably a rubbery polymer. It may be selected from:

(i) a homopolymer of a $C_{4-6}$ conjugated diolefin;

(ii) a copolymer of

(1) from about 40 to about 20 weight per cent of a $C_{8-12}$ vinyl or vinylidene aromatic monomer which may be unsubstituted or substituted by a straight or branched chain $C_{1-4}$ alkyl radical or a chlorine or bromine atom;

(2) from about 60 to about 80 weight per cent of a $C_{4-6}$ conjugated diolefin; and

(3) from 0 up to about 10 weight percent of a $C_{3-9}$ ethylenically unsaturated carboxylic acid or a $C_{1-4}$ alkyl or alkanol ester thereof or an amide derivative thereof which may be unsubstituted or substituted at the N atom by up to 2 $C_{1-4}$ alkyl or alkanol radicals; or

(iii) a copolymer of

(1) up to about 40 weight per cent of a $C_{3-6}$ alkenyl nitrile; and

(2) the balance substantially a $C_{4-6}$ conjugated diolefin.

Preferred $C_{4-6}$ conjugated diolefins are butadiene and isoprene.

Some $C_{8-12}$ vinyl or vinylidene monoaromatic monomers are styrene, α-methyl styrene, p-methyl styrene, chlorostyrene, and bromostyrene. Preferably, the vinyl or vinylidene monoaromatic monomers are styrene, α-methyl styrene and p-methyl styrene.

Some carboxylic acid monomers are ethylenically unsaturated carboxylic acids (e.g. acrylic acid, methacrylic acid, fumaric acid and itaconic acid) and their lower alkyl and alkanol esters thereof and primary amides which may be unsubstituted or substituted at the N atom by $C_{1-4}$ alkyl or alkanol radicals. Some monomers are methyl acrylate, ethyl acrylate, hydroxy ethyl acrylate, methyl methacrylate, ethyl methacrylate, hydroxyethyl methacrylate, acrylamide, methacrylamide, and N-methylol acrylamide.

A preferred alkenyl nitrile is acrylonitrile.

Preferably, the latices comprise any latices chosen from: natural rubber, styrene-butadiene copolymers, and acrylonitrile-butadiene copolymers. In the styrene-butadiene copolymers, the styrene level is preferably from about 20 to about 35 weight per cent and the balance substantially butadiene. The styrene butadiene latices usually contain at least about 60 per cent preferably at least about 65 per cent solids. The preferred level of acrylonitrile in the ACN-butadiene polymer is about 28 to about 34 weight per cent and the solids level in the latex is from about 35 to about 50 weight per cent.

The polymeric latex may be added to the asphalt emulsion in an amount up to about 15 percent, preferably not more than about 10 per cent, by dry weight of latex (i.e. polymer) based on the dry weight of asphalt. The latex should have a charge compatible with the charge in the asphalt in the aqueous emulsion. Thus, an anionic latex should be mixed with an anionic asphalt emulsion, and a cationic latex should be mixed with a cationic asphalt emulsion. Preferably, the latex is used in an amount to provide from about 2 to about 5, most preferably about 3 per cent by weight of polymer based on the weight of asphalt in the emulsion. Styrene-butadiene latex is preferably cold polymerized and may be anionic or cationic. Acrylonitrile-butadiene latex is preferably anionic. As noted above, the cross-linked waxy starches used in accordance with the present invention tend to degrade at a pH of greater than about 10. Anionic latices are usually stabilized with natural soap e.g. soaps of tall oils, rosin acid, or fatty acid or long chain vegetable oils. These soaps are pH sensitive and are less effective at pH's less than about 9 or about 10. It will be necessary to stabilize anionic latices with a synthetic soap which is effective at pH's less than about 10. This will result in a more expensive asphalt emulsion and latex.

Prior to mixing the asphalt and the latex in bulk a small quantity of latex and asphalt should be mixed to determine if the asphalt is likely to be destabilized.

It is convenient to preblend the latex and the cross-linked starch. The starch is added to the latex in an amount up to about 15 dry weight per cent based on the dry weight of the latex preferably from about 1 per cent by dry weight up. For cationic latices, the starch is preferably added in an amount from about 5 to about 15 weight per cent (dry on dry). For anionic latices, the starch is added in amounts from about 1 to about 15 weight per cent (dry on dry).

The following examples are intended to illustrate preferred aspects of the present invention. One hundred parts by dry weight of a cold polymerized cationic styrene-butadiene latex containing about 25 per cent styrene had added to it various amounts of starch in the form of slurry. The pH of the latex was then adjusted to the specified level. The latex/starch mixture was added to a cationic asphalt emulsion in an amount of 3 per cent by dry weight latex/starch based on the dry weight of the asphalt. The modified asphalt was maintained at 158°F (70°C) for the specified time. The Saybolt Viscosity of the asphalt emulsion was then recorded. The results of the test are set forth in Table 1.

TABLE 1

| | | Asphalt emulsion | Latex | Kind of starch | Parts starch | pH of latex | Hours @ 158°F (70°C) | Saybolt viscosity @ 122°F (50°C), seconds |
|---|---|---|---|---|---|---|---|---|
| Control (a) | | Ergon* CRS-2 | − | − | 0 | | | 105 |
| Control (b) | | " | + | − | 0 | 4.5 | | 34 |
| Compar-ative Examples | (c) | " | + | Avelex* 1030 | 5 | 6.0 | 2 | 39 |
| | | " | + | Avelex 1030 | 5 | 6.0 | 17 | 46 |
| | (d) | " | + | Avelex 1030 | 10 | 6.0 | 2 | 73 |
| | | " | + | Avelex 1030 | 10 | 6.0 | 16 | 48 |
| | (e) | " | + | Avelex 1030 | 10 | 5.0 | 2 | 81 |
| | | " | + | Avelex 1030 | 10 | 5.0 | 16 | 53 |
| | (f) | " | + | Avelex 1030 | 10 | 3.1 | 2 | 69 |
| | | " | + | Avelex 1030 | 10 | 3.1 | 16 | 49 |
| | (g) | " | + | Avelex 1030 | 10 | 1.9 | 2 | 63 |
| | | " | + | Avelex 1030 | 10 | 1.9 | 16 | 47 |
| | (h) | " | + | Sta-lock* | 10 | 5.0 | 2 | 211 |
| | | " | + | Sta-lock | 10 | 5.0 | 24 | 43 |
| | (i) | " | + | Ethylex* | 10 | 5.0 | 2 | 91 |
| | | " | + | Ethylex | 10 | 5.0 | 24 | 47 |
| Example 1 | | " | + | Resista* | 10 | 5.0 | 2 | 81 |
| | | " | + | Resista | 10 | 5.0 | 24 | 113 |

Ergon is a tradename for a cationic asphalt emulsion.

The starches tested were as follows:

Avelex 1030—hydroxy alkylated potatoe starch, not cross-linked (Tradename of American Key Products);

Sta-lock—cationic potatoe starch, not cross-linked (Tradename of A. E. Staley Mfg. Co.);

Ethylex—hydroxy ethylated corn starch, not cross-linked (Tradename of A. E. Staley Mfg. Co.);

Resista—cross-linked waxy corn starch (Tradename of A. E. Staley Mfg. Co.).

From the data:

(1) latex without starch depresses the viscosity of the asphalt emulsion (see control (b));

(2) generally, modified but not cross-linked starches build the viscosity of the emulsion initially, but the viscosity of the asphalt emulsion falls on storage at 158°F (70°C) for more than 2 hours (see Comparative Examples (c) to (i));

(3) the viscosity of an asphalt emulsion modified with latex and cross-linked waxy corn starch increases when the emulsion is held at 158°F (70°C).

Example 2

About 10 parts by dry weight of a cross-linked waxy corn starch were added to the same latex used in the above example per 100 parts by dry weight of latex. The resulting composition was added to a cationic asphalt emulsion and the Saybolt viscosity at 122°F (50°C) was measured initially and after 4 hours. The modified cationic emulsion was kept at about 180°F (82.2°C) during the test. The results are set forth below:

| Asphalt emulsion | CRS-2 viscosity | | =244 Saybolt seconds |
|---|---|---|---|
| Asphalt emulsion +3% latex/ starch mixture | CRS-2 viscosity | initial | =195 Saybolt seconds |
| | | 4 hours at about 180°F (82.2°C) | =206 Saybolt seconds |
| Asphalt emulsion +5% latex/ starch mixture | CRS-viscosity | initial | =146 Saybolt seconds |
| | | 4 hours at about 180°F (82.2°C) | =182 Saybolt seconds |
| Asphalt emulsion +10% latex/ starch emulsion | CRS-2 viscosity | initial | =46 Saybolt seconds |
| | | 4 hours at about 180°F (82.2°C). | =153 Saybolt seconds |

**Claim**

A modified aqueous asphalt emulsion having a pH up to 10 consisting essentially of

(a) an aqueous asphalt emulsion;

(b) up to 15 per cent by dry weight, based on the dry weight of the aqueous asphalt emulsion of a latex of a polymer selected from:

i) a homopolymer of a $C_4$—$C_6$ conjugated diolefin;

(ii) a copolymer of:

(1) from 40 to 20 weight per cent of a $C_{8-12}$ vinyl or vinylidene aromatic monomer which may be unsubstituted or substituted by a straight or branched chain $C_{1-4}$ alkyl radical or a chlorine or bromine atom;

(2) from 60 to 80 weight per cent of a $C_{4-6}$ conjugated diolefin;

(3) from 0 to 10 weight per cent of a $C_{3-9}$ ethylenically unsaturated carboxylic acid or a $C_{1-4}$ alkyl or alkanol ester thereof or an amide derivative thereof which may be unsubstituted or substituted at the N atom by up to 2 $C_{1-4}$ alkyl or alkanol radicals; and

(iii) a copolymer of

(1) up to 40 weight per cent of a $C_{3-6}$ alkenyl nitrile; and

(2) the balance substantially a $C_{4-6}$ conjugated diolefin; and

(c) up to 1 per cent by dry weight based on the dry weight of said aqueous asphalt emulsion of a crosslinked starch comprising not more than 27 per cent of amylose and the balance substantially amylopectin.

**Patentanspruch**

Modifizierte wäßrige Asphaltemulsion mit einem pH von bis zu 10, im wesentlichen bestehend aus

(a) einer wäßrigen Asphaltemulsion;

(b) bis zu 15 Trockengewichtsprozent bezüglich des Trockengewichts der wäßrigen Asphaltemulsion eines Latex eines Polymers ausgewählt aus:

(i) einem Homopolymer eines $C_4$—$C_6$-konjugierten Diolefins;

(ii) einem Copolymer aus

(1) 40 bis 20 Gewichtsprozent eines gegebenenfalls durch einen geradkettigen oder verzweigten $C_{1-4}$-Alkylrest oder ein Chlor- oder Bromatom substituierten $C_{8-12}$-vinyl- oder vinylidenaromatischen Monomers;

(2) 60 bis 80 Gewichtsprozent eines $C_{4-6}$-konjugierten Diolefins;

(3) 0 bis 10 Gewichtsprozent einer $C_{3-9}$-ethylenisch ungesättigten Carbonsäure oder deren $C_{1-4}$-Alkyl- oder -Hydroxyalkylester oder eines Amidderivats davon, das am N-Atom gegebenenfalls durch bis zu 2 $C_{1-4}$-Alkyl- oder -Hydroxyalkylreste substituiert sein kann; und

(iii) einem Copolymer aus

(1) bis zu 40 Gewichtsprozent eines $C_{3-6}$-Alkenylnitrils; und

(2) dem Rest im wesentlichen aus einem $C_{4-6}$-konjugierten Diolefin; und

(c) bis zu 1 Trockengewichtsprozent bezüglich des Trockengewichts jener wäßrigen Asphaltemulsion einer vernetzten Stärke, die zu höchstens 27 Prozent aus Amylose und dem Rest aus im wesentlichen Amylopectin besteht.

**Revendication**

Une émulsion aqueuse d'asphalte modifiée, de pH s'élevant jusqu'à 10, comprenant pour l'essentiel

a) une émulsion aqueuse d'asphalte;

b) jusqu'à 15% en poids à sec, sur la base du poids à sec de l'émulsion aqueuse d'asphalte, d'un latex provenant d'un polymère choisi parmi:

i) un homopolymère d'une dioléfine conjugée en $C_4$—$C_6$;

i) un copolymère de:

(1) de 40 à 20 pourcent en poids d'un monomère aromatique de vinyle ou vinylidène, en $C_8$—$C_{12}$, qui peut être non substitué ou substitué par un atome de chlore ou de brome ou par un radical alkylique formé par une chaîne droite ou ramifiée en $C_1$—$C_4$;

(2) de 60 à 80 pourcent en poids d'une dioléfine conjuguée en $C_4$—$C_6$;

(3) de 0 à 10 pourcent en poids d'un acide carboxylique en $C_3$—$C_9$, à insaturation éthylénique, ou d'un ester alcanolique ou alkylique en $C_1$—$C_4$ de celui-ci ou d'un dérivé amide de celui-ci, qui peut-être non su substitué ou substitué sur l'atome d'azote par au plus 2 radicaux alkylique(s) ou alcanolique(s) en $C_1$—$C_4$; et

iii) un copolymère de

(1) jusqu'à 40% en poids d'un nitrile d'alcényle en $C_3$—$C_6$; et

(2) le reste étant principalement constitué d'une dioléfine conjugée; et

c) jusqu'à 1% en poids sec, basé sur le poids sec de ladite émulsion aqueuse d'asphalte, d'un amidon réticulé constitué d'au plus 27 pour cent d'amylose et pour le reste, principalement d'amylopectine.

7